# EUROPEAN PATENT SPECIFICATION

(11) **EP 1 164 164 B1**
(45) Date of publication and mention of the grant of the patent: **07.01.2004**
(21) Application number: 01304025.8
(22) Date of filing: 02.05.2001
(51) Int. Cl.: C08K 13/02, C08L 23/02

(54) **Flame-retardant polyolefin-based resin composition, method for manufacturing, and flame-retardant cable therefrom**
Flammgeschützte Harzzusammensetzung auf Polyolefinbasis, Verfahren zur Herstellung und daraus hergestelltes flammgeschütztes Kabel
Composition de résine ignifugée à base de polyoléfine, procédé de sa préparation et cable ignifugée en préparé

(30) Priority: 14.06.2000 JP 2000178647
(43) Date of publication of application: 19.12.2001
(73) Proprietor: Dow Corning Toray Silicone Co., Ltd., Tokyo (JP)
(72) Inventor: Hatanaka, Hidekatsu, Dow Corning Toray Silicone, Ichihara-shi, Chiba Prefecture (JP); Nakanishi, Koji, Dow Corning Toray Silicone, Ichihara-shi, Chiba Prefecture (JP); Furukawa, Haruhiko, Dow Corning Toray Silicone, Ichihara-shi, Chiba Prefecture (JP); Shiromoto, Koji, Dow Corning Toray Silicone, Ichihara-shi, Chiba Prefecture (JP); Ueki, Hiroshi, Dow Corning Toray Silicone, Ichihara-shi, Chiba Prefecture (JP); Morita, Yoshitsugu, Dow Corning Toray Silicone, Ichihara-shi, Chiba Prefecture (JP)
(74) Representative: Kyle, Diana

(56) References cited:
- EP-A- 0 035 108
- US-A- 3 821 140

## Description

The present invention relates to a flame-retardant polyolefin-based resin composition, a method for manufacturing the same, and a flame-retardant cable; and more particularly to a polyolefin-based resin composition that retains excellent flame retardance even without containing organic halide-based flame retardants, to a method for manufacturing the same, and to a flame-retardant cable.

In conventional practice, highly extrudable and electrically insulating polyvinyl chloride resins and polyolefin-based resins such as polyethylene resins and ethylene-vinyl acetate copolymer resins are used as outer sheathing and insulating cores of electric wires and cables. In particular, polyvinyl chloride resins are widely used because of their superior characteristics. Polyolefin-based resins are rendered flame-retardant to prevent flames. In conventional practice, such flame retardance is commonly achieved by adopting methods in which organic compounds containing halogens such as chlorine and bromine (that is, organic halide-based flame retardants) are compounded with such thermoplastic polyolefin-based resins.

However, polyolefin-based resin compositions containing such organic halides produce large amounts of black smoke, biologically hazardous gases, and gases that corrode metals and the like during burning. Thermoplastic resins obtained by adding metal hydroxides such as aluminum hydroxide and magnesium hydroxide as flame retardants have been proposed for use in order to address this problem. However, large amounts of metal hydroxides must be added in order to achieve adequate flame retardance, creating problems such as impaired mechanical characteristics, reduced fluidity during melting, and the like. Research has therefore been conducted in order to develop flame-retardant aids capable of ensuring the necessary flame retardance while somewhat reducing the amount of added metal hydroxides. Silicone can be cited as a possible aid.

For example, Japanese Patent Application Laying-open (hereinafter called JP Kokai) No. Hei 1-141928 discloses a flame-retardant resin composition obtained by adding a metal hydroxide, a silicone rubber, and/or silicone gum (such as a highly polymerized polydimethyl silicone, polymethylvinyl silicone, or polymethylphenyl silicone) to a halogen-free polyolefin-based resin such as an ethylene-ethyl acrylate copolymer (EEA), and JP Kokai No. Hei 1-141929 discloses a flame-retardant resin composition obtained by adding a metal hydroxide and silicone oil (such as polydimethyl silicone or polymethylphenyl silicone) to a halogen-free polyolefin-based resin such as an ethylene-ethyl acrylate copolymer (EEA).

However, silicones are incompatible with polyethylene (PE), ethylene-vinyl acetate copolymers (EVA), ethylene-ethyl acrylate copolymers (EEA), and other polyolefin-based resins, and the components must therefore be compounded for a very long time in order to be adequately dispersed. Another drawback is that silicones, even when dispersed, tend to migrate to the surfaces of polyolefin-based resin moldings, adversely affecting the feel and appearance of the polyolefin-based resin moldings.

JP Kokai No. Hei 8-41256 discloses a method for manufacturing flame-retardant elastomers by the heat treatment of mixtures containing ethylene-α-olefin unconjugated diene copolymers, polyolefin-based resins, organopolysiloxanes having two or more SiH groups per molecule, hydrosilylation catalysts, epoxy-modified polyolefin-based resins, and magnesium hydroxide or aluminum hydroxide. However, elastomers resulting from the addition reaction and crosslinking of the SiH groups contained in the organopolysiloxanes with the unsaturated hydrocarbon groups contained in the ethylene-α-olefin unconjugated diene copolymers, prevents the polyolefin-based resins devoid of aliphatic unsaturated bonds from becoming less combustible.

An object of the present invention is to address the above-described problems by providing a polyolefin-based resin composition that is highly flame-retardant even without containing organic halide-based flame retardants or polyolefin-based resins having aliphatic unsaturated bonds, to provide a method for manufacturing the same, and to provide a flame-retardant cable.

As a result of thoroughgoing research aimed at attaining the stated object, the inventors perfected the present invention upon discovering that flame retardance can be markedly improved if a platinum-based catalyst, a metal hydroxide, and an organosilicon compound in which hydrogen atoms are bonded to silicon atoms are each added in a prescribed amount to a polyolefin-based resin.

### DESCRIPTION OF THE INVENTION

The present invention is a flame-retardant polyolefin-based resin composition, a method for making the composition, and a flame retardant cable made from the composition. The flame-retardant polyolefin-based resin composition comprises (A) 100 weight parts polyolefin-based resin, (B) 10 to 200 weight parts particulate metal hydroxide, (C) 0.01 to 50 weight parts of an organosilicon compound having at least one hydrosilyl group, and (D) a platinum-based catalyst in an amount of 0.1 ppm to 10,000 ppm in terms of platinum metal per weight part of components (A) and (B) combined. The invention also relates to a method for manufacturing a flame-retardant polyolefin-based resin composition characterized in that components (A) and (B) are mixed while heated, component (C) is admixed, and component (D) is then admixed. The invention further relates to a flame-retardant cable whose core wire is coated with the aforementioned flame-retardant polyolefin-based resin composition.

The polyolefin-based resin (component (A)) of the present flame-retardant polyolefin-based resin composition should be an olefin homopolymer or a copolymer of an olefin with another vinyl polymer, and is not subject to any particular limitations as long as it is devoid of aliphatic unsaturated bonds. Specific examples of such resins include high-density polyethylene, medium-density polyethylene, low-density polyethylene, and copolymers of ethylene with C₃-C₁₂ α-olefins such as propylene, butene-1, pentene-1, hexene-1, 4-methylpentene-1, octene-1, and decene-1; polypropylene and copolymers of propylene with C₃-C₁₂ α-olefins such as butene-1, pentene-1, hexene-1, 4-methylpentene-1, octene-1, and decene-1; copolymers of ethylene with vinyl-based monomers such as vinyl acetate, ethyl acrylate, methacrylic acid, ethyl methacrylate, maleic acid, and maleic anhydride; copolymers obtained by methods in which polyethylene or copolymers of ethylene with α-olefins are modified with acrylic acid, maleic acid, or another unsaturated carboxylic acid or derivative; and mixtures of two or more of the above-described polyolefin-based resins. The methods for manufacturing such polyolefin-based resins are not subject to any particular limitations, but because miscibility with other components is preferred, polymerization based on the use of metallocene-type catalysts is viewed as a preferred option.

Of these, polyethylene is preferred because of considerations related to the mechanical properties of the polyolefin-based resin composition, and ethylene-vinyl acetate copolymers, ethylene-ethyl acrylate copolymers, and mixtures thereof are preferred from the standpoint of enhanced flame retardance.

The particulate metal hydroxide (component (B)) should preferably be a hydroxide of a Group IIa, IIIa, or IVb metal of the Periodic Table. Hydroxides whose decomposition start temperatures fall within a range of 150-450°C are preferred because they are the most effective in terms of achieving flame retardance. Specifically, particulate magnesium hydroxide, particulate aluminum hydroxide, and mixtures of the two are preferred, and particulate magnesium hydroxide is particularly preferred. The mean grain size thereof should be 0.0 to 30 µm, and preferably 0.05 to 10 µm. This is because a hydroxide of this size disperses better in the polyolefin-based resin and has no adverse effect on the moldability of the resin composition.

Whether used singly or as mixture of two or more ingredients, component (B) should be added in an amount of 10 to 200 weight parts, and preferably 30 to 150 weight parts, per 100 weight parts polyolefin-based resin. This is because adding less than 10 weight parts fails to provide the resulting polyolefin-based resin composition with the desired degree of flame retardance, while adding more than 200 weight parts has a markedly adverse effect on the mechanical strength of the polyolefin-based resin composition and on melt fluidity.

Component (B) can be dispersed in the polyolefin-based resin without being modified in any way. It is also possible to use a product surface-treated with a silane coupling agent, a titanium coupling agent, a higher fatty acid, or another surface treatment agent. Calcium carbonate, talc, clay, mica, silica, and other fillers may be used together with these flame retardants as long as there is no marked reduction in flame retardance.

The organosilicon compound having at least one hydrosilyl group (component (C)) undergoes dehydrocondensation, polymerization, or crosslinking under the action of component (D) in the presence of component (B), improving the flame retardance of component (A). Consequently, each molecule should preferably contain two or more hydrosilyl groups, and the presence of three or more groups is even more preferred. A compound that does not volatilize easily during heating and mixing with the polyolefin-based resin should preferably be used in order to obtain higher flame retardance. Organohydrogenpolysiloxanes are typical examples of such organosilicon compounds. The degree of polymerization thereof may be 2 or greater, and a degree of 3 or greater is preferred from the standpoint of volatility. No limitations are imposed on the molecular structure thereof, which may be straight, branched, cyclic, reticulated, cage-shaped, or the like. Such organohydrogenpolysiloxanes are described by the average molecular formula

(R₃SiO_{½})ₐ(R₂SiO_{2/2})_{b}(RSiO_{3/2})_{c}(SiO_{4/2})_{d}

where R designates hydrogen atoms or monovalent hydrocarbon groups, of which at least one R is a hydrogen atom, and *a*, *b*, *c*, and *d* are each a number equal to or greater than 0, except that *a*, *b*, and *c* cannot all be zero at the same time.

The following are specific examples of such organohydrogenepolysiloxanes. 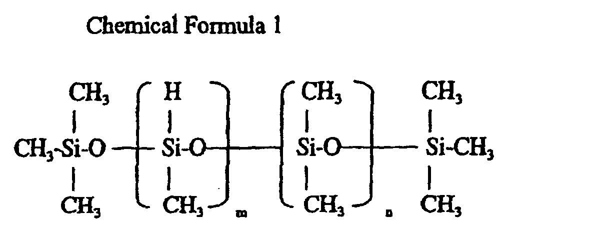 (where *m* and *n* are such that *m ≥* 1, *n* ≥ 0, and 5 ≤ *m* + *n* ≤ 5000) 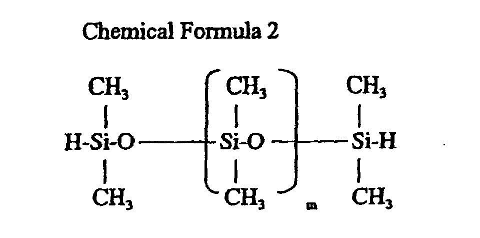 (where *m* is a number equal to or greater than 2) 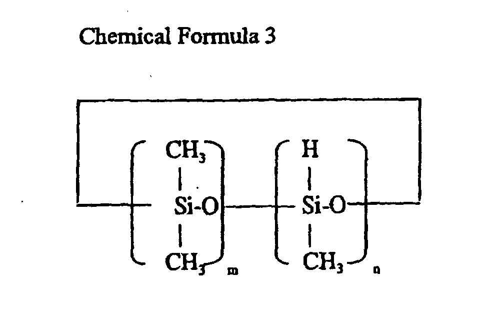 (where *m* and *n* are such that 0 ≤ *m*, 1 ≤ *n*, and 3 ≤ *m* + *n* ≤ 20) 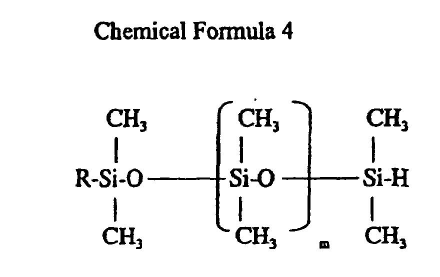 (where R is a C₁-C₂₀ monovalent hydrocarbon group, and *m* is such that 2 ≤ *m* ≤ 5000).

Component (C) is not necessarily limited to an organopolysiloxane and may be, for example, a polymer containing residual hydrosilyl groups that is obtained by conducting a hydrosilylation reaction between an organic compound having two allyl groups per molecule and a methyl oligosiloxane having four or more hydrosilyl groups per molecule in accordance with JP Kokai No. Hei 3-95266. Component (C) may be used singly or as a combination of two or more ingredients. A compound diluted with an organosiloxane devoid of hydrosilyl groups may also be used.

Component (C) should be used in an amount of 0.01 to 50 weight parts, preferably 0.5 to 25 weight parts, and ideally 1.0 to 20 weight parts, per 100 weight parts component (A).

The platinum-based catalyst (component (D)) acts on the hydrosilyl groups of component (C) and brings about dehydrocondensation. Examples of component (D) include microparticulate platinum, chloroplatinic acid, alcohol-modified chloroplatinic acid, platinum diketone complexes, platinum olefin complexes, complexes of dialkenyl oligosiloxane and chloroplatinic acid or platinum, and products obtained by supporting microparticulate platinum on alumina, silica, carbon black, and other particulate carriers. Of these, complexes of dialkenyl oligosiloxane and chloroplatinic acid or platinum are preferred. Particularly preferred are the chloroplatinic acid complex of 1,3-divinyltetramethyldisiloxane disclosed in Japanese Patent Publication (hereinafter called JP Kokoku) No. Sho 42-22924, and the chloroplatinic acid complex of 1,3-divinyltetramethyldisiloxane or the platinum complex of 1,3-divinyltetramethyldisiloxane disclosed in JP Kokoku No. Sho 46-28795, Sho 46-29731, and Sho 47-23679. Such platinum complexes should preferably be used after being diluted with liquid methylvinylpolysiloxane.

The amount of component (D) in terms of platinum metal should be 0.1 to 10,000 ppm, preferably 1 to 5000 ppm, and ideally 5 to 1000 ppm, in relation to the total amount of components (A) and (B). This is because using less than 0.1 ppm is ineffective for improving flame retardance, whereas using more than 10,000 ppm has an adverse effect on the electric insulation properties of the resulting polyolefin-based resin composition and results in a blackened appearance.

Antioxidants, lubricants, organic pigments, inorganic pigments, colorants, UV absorbers, heat stabilizers, light stabilizers, dispersants, antifungal agents, antistatic agents, and other additives may also be added as needed to the present polyolefin-based resin composition as long as the merits of the present invention are not compromised.

### Working Examples

The present invention will now be described through working examples.

Table 1 shows the average molecular formulas of the organopolysiloxanes used in the working and comparative examples. In Table 1, Me is a methyl group.

The following polyolefin-based resins were used in the working and comparative examples.

EEA (ethylene ethyl acrylate copolymer) resin: Jaylex® A1150, manufactured by Japan Polyolefin.

HDPE (high-density polyethylene): Hi-Zex® 5305E, manufactured by Mitsui Kagaku.

PP (polypropylene): Norbrene® Y101, manufactured by Sumitomo Chemical.

Particulate magnesium hydroxide: Kisuma® 5A, manufactured by Kyowa Kagaku, mean grain size: 0.8 µm.

Platinum catalyst solution: Vinyl-terminated polydimethylsiloxane solution of platinum/1,3-divinyltetramethyldisiloxane complex (platinum concentration: 0.5 wt%).

### Working Examples 1-8, Comparative Examples 1-5

Polyolefin-based resins, particulate magnesium hydroxide, and the hydrosilyl group-containing organopolysiloxanes SR1-SR5 shown in Table 1 were mixed in the ratios shown in Tables 2 and 3, yielding polyolefin-based resin compositions. The numbers in the tables indicate weight parts.

A Laboplastomill® (mixer manufactured by Toyo Seiki Seisakusho) was heated to 220°C, a polyolefin-based resin was introduced therein and melted, particulate magnesium hydroxide was then introduced, and the ingredients were compounded until a uniform dispersion was obtained. An organopolysiloxane containing hydrosilyl groups was subsequently added under stirring, the platinum catalyst solution was added, and the ingredients were mixed for 5 minutes at 220°C, yielding a polyolefin-based resin composition. The polyolefin-based resin composition thus obtained was injection-molded at a molding temperature of 220°C, and the oxygen index thereof was measured in accordance with JIS-K7201 "Combustion Test Methods for Plastics Based on Oxygen Index Techniques." The results are shown in Tables 2 and 3.

**Table 1**

| Organopolysiloxane | Average molecular formula |
|---|---|
| SR1 | HMe₂SiO(Me₂SiO)₆₀SiMe₂H |
| SR2 | HMe₂SiO(Me₂SiO)₁₇₀₀SiMe₂H |
| SR3 | Me₃SiO(Me₂SiO)₃₀SiMe₂H |
| SR4 | Me₃SiO(Me₂SiO)₅₄₀(MeHSi)₁₀SiMe₃ |
| SR5 | Me₃SiO(Me₂SiO)₃₀₀SiMe₃ |

**Table 2**

| | Working Example 1 | Working Example 2 | Comparative Example 1 | Comparative Example 2 | Comparative Example 3 | Comparative Example 4 |
|---|---|---|---|---|---|---|
| EEA | 100 | 100 | 100 | 100 | 100 | 100 |
| Magnesium | 50 | 100 | 50 | 100 | 100 | 100 |
| hydroxide SR1 | 5 | 10 | | | 10 | |
| Platinum catalyst solution | 0.4 | 0.4 | | | | 0.4 |
| Oxygen index | 30 | 40 | 25 | 27 | 35 | 26 |

**Table 3**

| | Working Example 3 | Working Example 4 | Working Example 5 | Working Example 6 | Working Example 7 | Working Example 8 | Comparative Example 5 |
|---|---|---|---|---|---|---|---|
| HDPE | 100 | 100 | 100 | 100 | 100 | | 100 |
| PP | | | | | | 100 | |
| Magnesium | 100 | 100 | 100 | 120 | 100 | 100 | 100 |
| hydroxide SR2 | 10 | | | | | | |
| SR3 | | 10 | | | | | |
| SR4 | | | 10 | 10 | 10 | 10 | |
| SR5 | | | | | | | 10 |
| Platinum catalyst solution | 0.4 | 0.4 | 0.4 | 0.4 | 0.4 | 0.4 | 0.4 |
| Oxygen index | 37 | 41 | 41 | 44 | 41 | 37 | 35 |

## Claims

1. A flame-retardant polyolefin-based resin composition comprising
(A) 100 weight parts polyolefin-based resin,
(B) 10 to 200 weight parts particulate metal hydroxide,
(C) 0.01 to 50 weight parts of an organosilicon compound having at least one hydrosilyl group, and
(D) a platinum-based catalyst in an amount of 0.1 ppm to 10,000 ppm in terms of platinum metal per weight part of components (A) and (B) combined.

2. The flame-retardant polyolefin-based resin composition according to Claim 1, wherein the organosilicon compound having at least one hydrosilyl group is an organohydrogenpolysiloxane.

3. The flame-retardant polyolefin-based resin composition according to Claim 1 or 2, wherein the metal hydroxide is magnesium hydroxide.

4. The flame-retardant polyolefin-based resin composition according to any of Claims 1 to 3, wherein the polyolefin-based resin is polyethylene, polypropylene, an ethylene-vinyl acetate copolmyer or an ethylene-ethyl acrylate copolymer.

5. The flame-retardant polyolefin-based resin composition according to any of Claims 1 to 4, wherein the metal hydroxide has a decomposition temperature within a range of 150 to 450°C.

6. The flame-retardant polyolefin-based resin composition according to any of Claims 1 to 5, wherein the metal hydroxide has a mean particle size of 0.05 to 10 µm.

7. The flame-retardant polyolefin-based resin composition according to any of Claims 1 to 6, comprising 30 to 150 weight parts of component (B) per 100 weight parts of component (A).

8. The flame-retardant polyolefin-based resin composition according to any of Claims 1 to 7, wherein component (C) contains at least three hydrosilyl groups.

9. The flame-retardant polyolefin-based resin composition according any of Claims 1 to 8, comprising 1 to 20 weight parts of component (C) per 100 weight parts of component (A).

10. A method for manufacturing a flame-retardant polyolefin-based resin composition comprising the steps of
(i) mixing and heating (A) 100 weight parts polyolefin-based resin with (B) 10 to 200 weight parts particulate metal hydroxide,
(ii) adding (C) 0.01 to 50 weight parts of an organosilicon compound having at least one hydrosilyl group and mixing, and
(iii) adding (D) a platinum-based catalyst in an amount of 0.1 ppm to 10,000 ppm in terms of platinum metal per weight part of components (A) and (B) combined.

11. A method according to claim 10, wherein the organosilicon compound having at least one hydrosilyl group is an organohydrogenpolysiloxane.

12. A method according to Claim 10 or 11, wherein the metal hydroxide is magnesium hydroxide.

13. A method according to any of Claims 10 to 12, wherein the polyolefin-based resin is polyethylene, polypropylene, an ethylene-vinyl acetate copolymer or an ethylene-ethyl acrylate copolymer.

14. A method according to any of Claims 10 to 13, comprising 30 to 150 weight parts of component (B) per 100 weight parts of component (A).

15. A method according to any of Claims 10 to 14, comprising 1 to 20 weight parts of component (C) per 100 weight parts of component (A).

16. A flame-retardant cable coated with a flame-retardant polyolefin-based resin composition according to any of Claims 1 to 9.

## Patentansprüche

1. Flammenhemmende Harzzusammensetzung auf Polyolefinbasis, enthaltend:
(A) 100 Gewichtsteile Harz auf Polyolefinbasis,
(B) 10 bis 200 Gewichtsteile partikuläres Metallhydroxid,
(C) 0,01 bis 50 Gewichtsteile einer Organosiliciumverbindung mit mindestens einer Hydrosilylgruppe und
(D) einen Katalysator auf Platinbasis in einer Menge von 0,1 ppm bis 10.000 ppm, ausgedrückt als Platinmetall pro Gewichtsanteil der Komponenten (A) und (B) in Kombination.

2. Flammenhemmende Harzzusammensetzung auf Polyolefinbasis gemäß Anspruch 1, worin die Organosiliciumverbindung mit mindestens einer Hydrosilylgruppe ein Organowasserstoffpolysiloxan ist.

3. Flammenhemmende Harzzusammensetzung auf Polyolefinbasis gemäß Anspruch 1 oder 2, worin das Metallhydroxid Magnesiumhydroxid ist.

4. Flammenhemmende Harzzusammensetzung auf Polyolefinbasis gemäß einem der Ansprüche 1 bis 3, worin das Harz auf Polyolefinbasis Polyethylen, Polypropylen, ein Ethylen-Vinylacetat-Copolymer oder ein Ethylen-Ethylacrylat-Copolymer ist.

5. Flammenhemmende Harzzusammensetzung auf Polyolefinbasis gemäß einem der Ansprüche 1 bis 4, worin das Metallhydroxid eine Zersetzungstemperatur innerhalb eines Bereichs von 150 bis 450°C aufweist.

6. Flammenhemmende Harzzusammensetzung auf Polyolefinbasis gemäß einem der Ansprüche 1 bis 5, worin das Metallhydroxid eine mittlere Teilchengröße von 0,05 bis 10 µm aufweist.

7. Flammenhemmende Harzzusammensetzung auf Polyolefinbasis gemäß einem der Ansprüche 1 bis 6, die 30 bis 150 Gewichtsteile Komponente (B) pro 100 Gewichtsteile Komponente (A) enthält.

8. Flammenhemmende Harzzusammensetzung auf Polyolefinbasis gemäß einem der Ansprüche 1 bis 7, worin Komponente (C) mindestens drei Hydrosilylgruppen enthält.

9. Flammenhemmende Harzzusammensetzung auf Polyolefinbasis gemäß einem der Ansprüche 1 bis 8, die 1 bis 20 Gewichtsteile Komponente (C) pro 100 Gewichtsteile Komponente (A) enthält.

10. Verfahren zur Herstellung einer flammenhemmenden Harzzusammensetzung auf Polyolefinbasis, umfassend die Schritte:
(i) Mischen und Erwärmen von (A) 100 Gewichtsteilen Harz auf Polyolefinbasis mit (B) 10 bis 200 Gewichtsteilen partikulärem Metallhydroxid,
(ii) Hinzufügen von (C) 0,01 bis 50 Gewichtsteilen einer Organosiliciumverbindung mit mindestens einer Hydrosilylgruppe und Mischen und
(iii) Hinzufügen von (D) einem Katalysator auf Platinbasis in einer Menge von 0,1 ppm bis 10.000 ppm, ausgedrückt als Platinmetall pro Gewichtsanteil der Komponenten (A) und (B) in Kombination.

11. Verfahren gemäß Anspruch 10, worin die Organosiliciumverbindung mit mindestens einer Hydrosilylgruppe ein Organowasserstoffpolysiloxan ist.

12. Verfahren gemäß Anspruch 10 oder 11, worin das Metallhydroxid Magnesiumhydroxid ist.

13. Verfahren gemäß einem der Ansprüche 10 bis 12, worin das Harz auf Polyolefinbasis Polyethylen. Polypropylen, ein Ethylen-Vinylacetat-Copolymer oder ein Ethylen-Ethylacrylat-Copolymer ist.

14. Verfahren gemäß einem der Ansprüche 10 bis 13, wobei 30 bis 150 Gewichtsteile Komponente (B) pro 100 Gewichtsteile Komponente (A) eingesetzt werden.

15. Verfahren gemäß einem der Ansprüche 10 bis 14, wobei 1 bis 20 Gewichtsteile Komponente (C) pro 100 Gewichtstelle Komponente (A) eingesetzt werden.

16. Flammenhemmendes Kabel, das mit einer flammenhemmenden Harzzusammensetzung auf Polyolefinbasis gemäß einem der Ansprüche 1 bis 9 ummantelt ist.

## Revendications

1. Composition de résine ignifuge à base de polyoléfine comprenant
(A) 100 parties en poids de résine à base de polyoléfine,
(B) 10 à 200 parties en poids d'hydroxyde de magnésium particulaire,
(C) 0,01 à 50 parties en poids d'un composé d'organosilicone ayant au moins un groupe hydrosilyle, et
(D) un catalyseur à base de platine dans une quantité de 0,1 ppm à 10 000 ppm par rapport au platine métallique par partie en poids des composants (A) et (B) combinés.

2. Composition de résine ignifuge à base de polyoléfine selon la revendication 1, dans laquelle le composé d'organosilicone ayant au moins un groupe hydrosilyle est un organohydrogènepolysiloxane.

3. Composition de résine ignifuge à base de polyoléfine selon la revendication 1 ou 2, dans laquelle l'hydroxyde métallique est l'hydroxyde de magnésium.

4. Composition de résine ignifuge à base de polyoléfine selon l'une quelconque des revendications 1 à 3, dans laquelle la résine à base de polyoléfine est le polyéthylène, le polypropylène, un copolymère d'acétate d'éthylène-vinyle ou un copolymère d'acrylate d'éthylène-éthyle.

5. Composition de résine ignifuge à base de polyoléfine selon l'une quelconque des revendications 1 à 4, dans laquelle l'hydroxyde métallique a une température de décomposition dans une plage allant de 150 à 450°C.

6. Composition de résine ignifuge à base de polyoléfine selon l'une quelconque des revendications 1 à 5, dans laquelle l'hydroxyde métallique a une grosseur moyenne de particules de 0,05 à 10 µm.

7. Composition de résine ignifuge à base de polyoléfine selon l'une quelconque des revendications 1 à 6, comprenant de 30 à 150 parties en poids du composant (B) par 100 parties en poids du composant (A).

8. Composition de résine ignifuge à base de polyoléfine selon l'une quelconque des revendications 1 à 7, dans laquelle le composant (C) contient au moins trois groupes hydroxyle.

9. Composition de résine ignifuge à base de polyoléfine selon l'une quelconque des revendications 1 à 8, comprenant de 1 à 20 parties en poids du composant (C) par 100 parties en poids du composant (A).

10. Procédé pour la préparation d'une composition de résine ignifuge à base de polyoléfine comprenant les étapes consistant à
(i) mélanger et chauffer 100 parties en poids de résine à base de polyoléfine (A) avec 10 à 200 parties en poids d'hydroxyde métallique particulaire (B),
(ii) ajouter 0,01 à 50 parties en poids d'un composé d'organosilicone (C) ayant au moins un groupe hydrosilyle et mélanger, et
(iii) ajouter un catalyseur à base de platine (D) dans une quantité de 0,1 ppm à 10 000 ppm par rapport au platine métallique par partie en poids des composants (A) et (B) combinés.

11. Procédé selon la revendication 10, dans lequel le composé d'organosilicone ayant au moins un groupe hydrosilyle est un organohydrogènepolysiloxane.

12. Procédé selon la revendication 10 ou 11, dans lequel l'hydroxyde métallique est l'hydroxyde de magnésium.

13. Procédé selon l'une quelconque des revendications 10 à 12, dans lequel la résine à base de polyoléfine est un polyéthylène, un polypropylène, un copolymère d'acétate d'éthylène-vinyle ou un copolymère d'acrylate d'éthylène-éthyle.

14. Procédé selon l'une quelconque des revendications 10 à 13, comprenant de 30 à 150 parties en poids du composant (B) par 100 parties en poids du composant (A).

15. Procédé selon l'une quelconque des revendications 10 à 14, comprenant de 1 à 20 parties en poids du composant (C) par 100 parties en poids du composant (A).

16. Câble ignifuge recouvert avec une composition ignifuge à base de polyoléfine selon l'une quelconque des revendications 1 à 9.
